# EUROPÄISCHE PATENTSCHRIFT

(11) **EP 2 540 617 B1**
(45) Veröffentlichungstag und Bekanntmachung des Hinweises auf die Patenterteilung: **29.08.2018**
(21) Anmeldenummer: 12173700.1
(22) Anmeldetag: 26.06.2012
(51) Int. Cl.: B64C 1/14, E05D 15/48

(54) **Sicherheitsschwenkmechanismus**
Safety swivel mechanism
Mécanisme de pivotement de sécurité

(30) Priorität: 27.06.2011 DE 202011102487 U
(43) Veröffentlichungstag der Anmeldung: 02.01.2013
(73) Patentinhaber: SACS GmbH, 72186 Empfingen (DE)
(72) Erfinder: Kuhm, Rolf, 71063 Sindelfingen (DE); Dratius, Oliver, 72458 Albstadt (DE)
(74) Vertreter: Patentanwälte Magenbauer & Kollegen Partnerschaft mbB

(56) Entgegenhaltungen:
- EP-A2- 0 259 886
- US-A- 5 289 615
- US-A1- 2002 139 897

## Beschreibung

Die vorliegende Erfindung betrifft eine Sicherheitsschwenkmechanismus für eine Schiebetüre gemäß dem Oberbegriffs des Patentanspruchs 1.

Schwenkmechanismen für Schiebetüren sind beispielsweise für den Einsatz in der Luftfahrt notwendig, da es dort auf Grund gesetzlicher Vorschriften notwendig ist, dass eine Schiebetüre im Falle eines Druckabfalls oder einer anderen Notsituation aus Ihrer Schiebeebene herausgeschwenkt werden kann, so dass auch bei einem Defekt des Schiebemechanismus bzw. im Falle einer geschlossenen Tür bei einem Druckabfall ein Durchgang als Fluchtweg bzw. zum Druckausgleich freigegeben wird. Normalerweise bewegen sich die Schiebetüren in Flugzeugen in einer Schiebeebene, wobei in einem geschlossenen Zustand der Durchgang durch ein Türblatt der Schiebetüre verschlossen ist und das Türblatt in einen geöffneten Zustand der Schiebetüre in einer Tasche einer Zwischenwand, die von einander abzutrennenden Räume trennt, aufgenommen ist. In dieser Zwischenwand ist außerdem eine Führung angeordnet, die die Schiebetüre in Ihrer Schiebeebene hält.

Aus dem Stand der Technik sind zweierlei Möglichkeiten für ein Sicherheitsöffnen bzw. Schwenken von Schiebetüren bekannt.

Zum Einen gibt es die Möglichkeit, dass die Schiebetüre vollständig aus ihrer Führung gelöst und lediglich durch Fangseile gehalten wird. Diese Lösung wird jedoch als nachteilig empfunden, da dabei die lediglich mit Fangseilen gehaltene Schiebetüre mehr oder weniger unkontrolliert in der Türöffnung hängt und damit ein erhebliches Verletzungsrisiko darstellt. Diese Lösung ist außerdem nicht bevorzugt, da sowohl die Schiebetüre als auch umgebende Gegenstände der Inneneinrichtung des Flugzeuges durch die mangelnde Führung der Schiebetüre beschädigt werden können.

Als zweite Möglichkeit ist aus der US 6,186,444 B1 bekannt, eine Schiebetüre zusätzlich mit einem Scharnier zu versehen, das bei einer Krafteinwirkung auf die Türe in Schwenkrichtung in einer Führung aus der Wandtasche gleitet und so ein Schwenken der Türe frei gibt. Gleichzeitig ist vorgesehen, dass die Türe bei Ausführung der Schwenkbewegung eine Abwärtsbewegung durchführt, um so zu verhindern, dass durch ein Schwenken der Türe die Türe oder die im Bereich der Türe angeordnete Deckenverkleidung beschädigt werden. Das in der US 6,186,444 B1 vorgeschlagene Scharnier ist in seiner Führung federbelastet gehalten, so dass ein Schwenken nur bei einer erhöhten Krafteinwirkung auf das Türblatt freigegeben wird. In dem dort beschriebenen Beispiel soll so verhindert werden, dass es im Normalbetrieb der Schiebetüre nicht zu einer Schwenkbewegung kommt.

An dieser Lösung wird es jedoch nachteilig empfunden, dass eine Verbindung zwischen der Schiebetüre und ihrer Führung, die die Schiebetüre in der Schiebeebene hält nur eine sehr geringe Steifigkeit aufweist und die Schiebetüre damit in Schwenkrichtung Spiel besitzt, d. h. eine Bewegung in Schwenkrichtung nicht vollständig unterbunden werden kann.

Da ein Auslösen der Schiebetüre, d.h. eine Überführung in den Schwenkbetrieb eine erhebliche Krafteinwirkung auf die Schiebetüre bedeutet wird es außerdem als nachteilig empfunden, dass die Türe in dem bekannten Beispiel ohne ein Überprüfung der Funktionstüchtigkeit und vor allem ohne eine Sicherheitsüberprüfung wieder in den Schiebebetrieb überführt werden kann.

Aus der US 5,289,615 ist eine Flugzeug-Schiebetür bekannt, bei der das Türblatt derart verschiebbar an einem Scharnier zur Verbindung mit dem Flugzeugrumpf angeordnet ist, dass bei einer Bewegung des Scharniers die Orientierung des Türblatts relativ zur Längsachse des Flugzeugrumpfs gleich bleibt.

Es ist die Aufgabe der vorliegenden Erfindung eine Sicherheitsschwenkmechanismus für eine Schiebetüre zur Verfügung zu stellen, der die oben genannten Nachteile vermeidet und gleichzeitig eine kostengünstige uns sichere Alternative darstellt.

Diese Aufgabe wird durch einen Sicherheitsschwenkmechanismus mit den Merkmalen des Patentanspruchs 1 gelöst.

Ein erfindungsgemäßer Sicherheitsschwenkmechanismus für eine Schiebetüre weist wenigstens ein Scharnier auf, das zwischen einem Türblatt und einem Schlitten zur Führung der Schiebetüre angeordnet ist und ist mit einer Absenkanordnung zum Absenken der Schiebetüre in einem ausgelösten Zustand ausgestattet, wobei zwischen dem Türblatt und dem Schlitten wenigstens ein Blockierelement vorgesehen ist, das das Scharnier und/oder die Absenkanordnung in nicht ausgelöstem Zustand blockiert.

Auf diese Weise wird erreicht, dass zwischen dem Türblatt und dem Schlitten eine hinreichend steife Verbindung geschaffen wird, wobei gleichzeitig eine Schwenkbewegung und/oder eine Absenkbewegung des Türblattes verhindert werden. Eine Blockierung des Scharniers und der Absenkanordnung kann durch eine Anordnung des Blockierelements zwischen dem Türblatt und dem Schlitten, einem dem Türblatt zugeordneten Teil des Scharniers und dem Schlitten, einem dem Schlitten zugeordneten Teil des Scharniers und dem Türblatt sowie zwischen den jeweiligen Scharnierabschnitten erreicht werden und ist von der Formulierung zwischen dem Türblatt und dem Schlitten mit umfasst. Das Blockierelement ist in jedem Fall derart zu dimensionieren, dass die Verbindung zwischen dem Türblatt und dem Schlitten die notwendige Steifigkeit aufweist um ein Spiel der Schiebetüre in Schwenkrichtung weitestgehend zu vermeiden. Bevorzugt ist eine Ausgestaltung, bei der das Blockierelement derart angeordnet ist, dass sowohl die Schwenkbewegung als auch das Absenken gleichzeitig blockiert werden.

Um zu verhindern, dass die Schiebetüre nach dem Auslösen des Sicherheitsschwenkmechanismus ohne Überprüfung der Funktionalität und ohne Überprüfung, dass weiterhin sämtliche Sicherheitsanforderungen erfüllt sind, wieder in den Normalbetrieb, d.h. ein Betrieb in Schieberichtung, überführt wird, ist das Blockierelement bevorzugt derart ausgebildet, dass eine Überführung der Schiebetüre in den ausgelösten Zustand irreversibel ist. Auf diese Weise kann gewährleistet werden, dass die Schiebetüre, wenn einer erhöhten Krafteinwirkung zum Überführen in den Schwenkzustand ausgesetzt war, nicht ohne weiteres wieder in den regulären Schiebebetrieb überführt werden kann. Ein Verbringen der Schiebetüre zurück in die Tasche der Zwischenwand ist aus Sicherheitsgründen notwendig und gewünscht.

Eine irreversible Ausgestaltung des Sicherheitsschwenkmechanismus ist besonders einfach durch ein als Abreißelement ausgebildetes Blockierelement zu erreichen. Ein solches Abreißelement weist eine Sollbruchstelle auf, an der es zum Auslösen des Sicherheitsschwenkmechanismus bei Einwirkung einer definierten Kraft abreist und damit den Sicherheitsschwenkmechanismus frei gibt. Beispielhafte Ausgestaltungen eines solchen Abreißelements sind Abreißschrauben und Abreißbleche, die bevorzugt zur Ausbildung des Abreißelements verwendet werden.

Um die notwendige Steifigkeit zwischen dem Türblatt und dem Schlitten zu gewährleisten sind bevorzugt wenigstens zwei Blockierelemente vorgesehen. Je nach Anforderungen können aber auch drei oder mehr Blockierelemente eingesetzt werden.

Um auch im Schwenkbetrieb der Türe eine hinreichend stabile Führung des Türblattes zu gewährleisten sind bevorzugt wenigstens zwei Scharniere vorgesehen, wobei pro Scharnier bevorzugt ein Blockierelement vorgesehen ist.

Um ein einfacheres Verstauen der Schiebetüre mit Sicherheitsschwenkmechanismus zu gewährleisten ist die Schiebetüre mit einem wenigstens zweiteilig ausgeführtem Türblatt mit einem oberen Türblattelement und einem unteren Türblattelement ausgebildet. Die Türblattelemente sind so ausgebildet, dass das untere Türblattelement in einem Hohlraum des oberen Türblattelements aufgenommen werden kann, so dass beim Öffnen der Schiebetüre ein verringerter Stauraum in der Zwischenwandung zur Unterbringung des Türblattes ausreichend ist.

In diesem Fall ist es ausreichend, wenn die Absenkeinrichtung auf das obere Türblattelement wirkt, da dieses alleinig in Berührung mit der Deckenverkleidung oder anderen in diesem Bereich angeordneten Einbauten in Berührung kommt.

Für das untere Türblattelement kann es dann sinnvoll sein, insbesondere wenn dieses durch eine nach unten geneigt verlaufende Schiene geführt wird, eine Hebeeinrichtung vorzusehen. Eine solche Hebeeinrichtung kann das untere Türblattelement beim Überführen der Schiebetüre in den Schwenkbetrieb anheben, so dass es nicht der Neigung seine Schiene entsprechend weiter nach unten geführt wird und die Schiebetüre am Boden verklemmt, sondern durch ein Anheben den Bodenbereich frei gibt und damit ein erleichtertes Schwenken ermöglicht.

Eine besonders zuverlässige Ausgestaltung der Hebeeinrichtung wird dadurch erreicht, dass diese mit zwei Schwenkarmen ausgestaltet ist. Die Schwenkarme sind so angeordnet, dass sie das unter Türblattelement, wenn die Türe in einen Schwenkbetrieb überführt wird, in Art einer Parallelogrammmechanik anheben.

Die Schwenkarme der Hebeeinrichtung sind bevorzugter Weise zwischen einem Unterschlitten, der das untere Türblattelement führt und einem Scharnier zum Schwenken des untern Türblattelements angeordnet.

Um einen Schwenkwinkel der Schiebetüre zu begrenzen kann außerdem ein Anschlag vorgesehen sein. Durch Begrenzung des Schwenkwinkels der Schiebetüre kann einerseits erreicht werden, dass Personen, die im Bereich der Schiebetüre sitzen durch ein Auslösen des Schwenkmechanismus keine Verletzungen erfahren und andererseits Anbauelemente im Bereich der Schiebetüre durch ein heftiges Aufschwenken beschädigt werden.

Das Blockierelement kann auch zweiteilig ausgebildet sein, wobei ein erster Teil das Scharnier und ein zweiter Teil die Absenkanordnung blockiert.

Die Erfindung wird nachfolgend anhand eines Ausführungsbeispiels unter Bezugnahme auf die beigefügten Figuren eingehend erläutert. Es zeigt:
- Figur 1: ein Ausführungsbeispiel mit einer Schiebetüre mit einem erfindungsgemäßen Sicherheitsschwenkmechanismus,
- Figur 2a: eine Draufsicht von oben auf die Schiebetüre aus Figur 1 in Normal- bzw. Schiebebetrieb,
- Figur 2b: die Schiebetüre aus Figur 2a in ausgelöstem Zustand bzw. im Schwenkbetrieb,
- Figur 3: eine Detailansicht des Schlittens mit Sicherheitsschwenkmechanismus und daran angeordnetem oberen Türblattelement,
- Figur 4: den Sicherheitsschwenkmechanismus aus Figur 3 in einer Schnittdarstellung,
- Figur 5: eine Detaildarstellung des Unterschlittens aus Figur 1 mit Hebevorrichtung daran angeordnetem unteren Türblattelement,
- Figur 6: eine Schnittdarstellung des Hebemechanismus aus Figur 5.

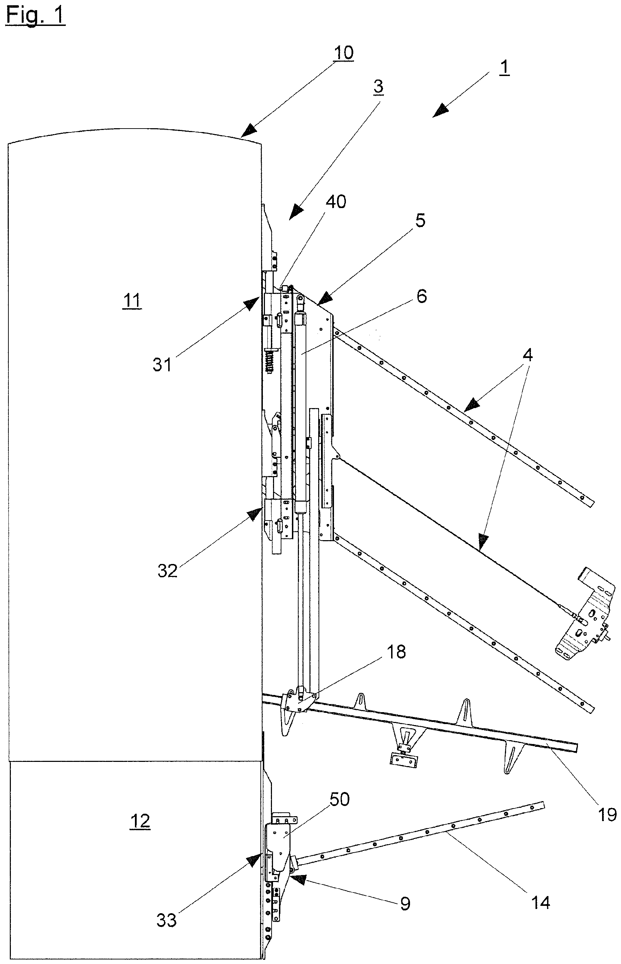

Figur 1 zeigt eine Schiebetüre 1 mit einem Türblatt 10, das mit Hilfe eines auf einer Linearführung 4 laufenden Schlittens 5 geführt ist. Das Türblatt 10 weist ein oberes Türblattelement 11 und ein unteres Türblattelement 12 auf, wobei lediglich das obere Türblattelement 11 an dem Schlitten 5 angeordnet und für das untere Türblattelement 12 ein separater Unterschlitten 9 vorgesehen ist. Der Unterschlitten 9 läuft auf einer Unterschiene 14. Wie aus Figur 1 ersichtlich ist, sind die Linearführung 4 sowie die Unterschiene 14 geneigt angeordnet, wobei die Linearführung 4 in Schließrichtung der Schiebetüre 1, d. h. im vorliegenden Ausführungsbeispiel von rechts nach links verlaufend schräg ansteigend angeordnet ist. Die Unterschiene 14 ist in Schließrichtung der Schiebetüre 1 schräg nach unten laufend angeordnet. Im vorliegenden Ausführungsbeispiel wird damit erreicht, dass bei einem Öffnen der Schiebetüre 1 das obere Türblattelement 11 schräg abwärts geführt wird und gleichzeitig das untere Türblattelement 12 schräg nach oben geführt und einen Hohlraum des oberen Türblattelements 11 verbracht wird.

Die im vorliegenden Ausführungsbeispiel gezeigte Schiebetüre 1 weist außerdem einen kraftunterstützt arbeitenden Öffnungsmechanismus mit einer Gasdruckfeder 6 auf, die zwischen dem Schlitten 5 und einem auf einer Führungsschiene 19 laufenden Führungswagen 18 wirkt.

Zwischen den Türblattelementen 11, 12 und den zugeordneten Schlitten 5, 9 ist ein Sicherheitsschwenkmechanismus 3 angeordnet, dessen einzelne Komponenten nachfolgend näher erläutert werden.

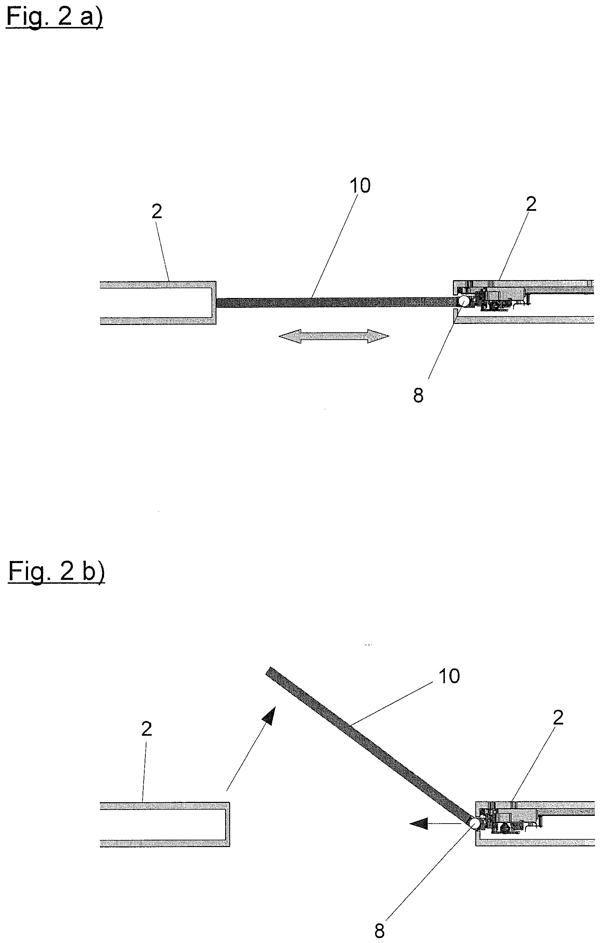

Die Figuren 2a und 2b zeigen die grundsätzliche Funktion des Sicherheitsschwenkmechanismus 3. In Figur 2a ist die Schiebetüre 1 im Normalbetrieb bzw. Schiebebetrieb, d. h. mit nicht ausgelöstem Sicherheitsschwenkmechanismus 3 dargestellt. Das Türblatt 10 der Schiebetüre 1 verschließt eine Türöffnung in einer Trennwand 2 eines Flugzeuges. Zum Öffnen der Schiebetüre 1 wird das Türblatt 10 mit Hilfe der zuvor beschriebenen Anordnung aus dem auf der Linearführung 4 laufenden Schlitten 5 sowie dem auf der Unterschiene 14 laufenden Unterschlitten 9 eine Ausnehmung bzw. Tasche der Trennwand 2 verbracht. In diesem Normalbetrieb liegt ein Drehpunkt 8 der Scharniere auch in geschlossenem Zustand der Schiebetüre 1 im Inneren der Tasche.

Zwischen den Türblattelementen 11, 12 und den zugeordneten Schlitten 5, 9 sind als wesentlicher Bestandteil des Sicherheitsschwenkmechanismus Scharniere 31, 32, 33 angeordnet. Diese Scharniere 31, 32, 33 ermöglichen in ausgelöstem Zustand des Schwenkmechanismus, d. h. in einem Schwenkbetrieb der Schiebetüre, ein Schwenken des Türblattes 10.

Wird das Türblatt, wie in Figur 2b dargestellt mit einer Krafteinwirkung in Schwenkrichtung beaufschlagt, so entsteht an einer Öffnung der Tasche in der Trennwand 2 eine Hebelwirkung, aufgrund derer das Türblatt 10 der Schiebetüre weiter aus der Tasche gezogen wird, so dass schlussendlich der Drehpunkt 8 in einem Bereich außerhalb der Tasche liegt und ein Schwenken des Türblattes 10 ermöglicht wird.

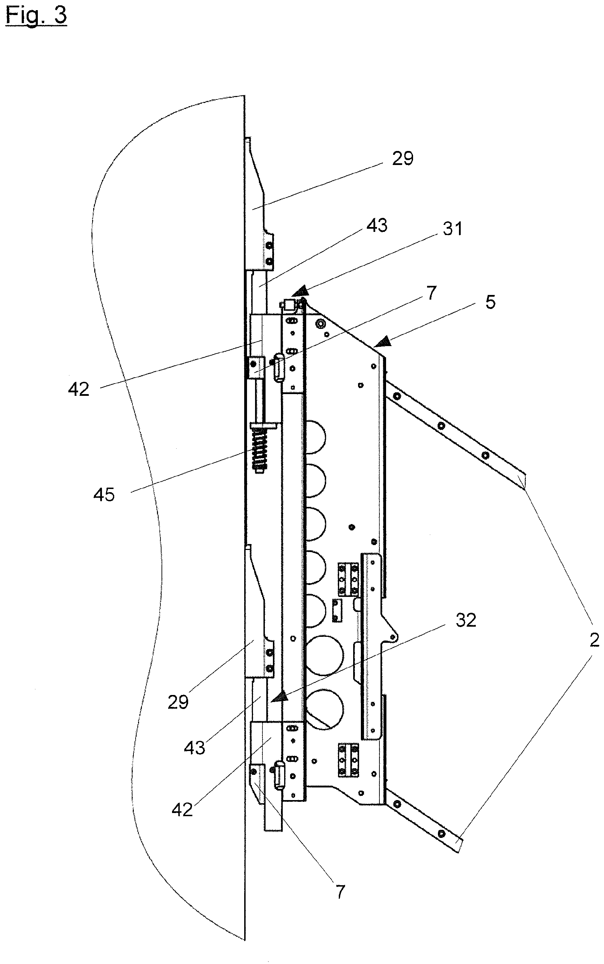

Figur 3 zeigt eine vergrößerte Darstellung des Schlittens 5 mit dem daran angeordneten oberen Türblattelement 11.

Das obere Türblattelement 11 ist über ein erstes oberes Scharnier 31 und ein zweites oberes Scharnier 32 an dem Schlitten 5 gehaltert. Das obere Türblattelement 11 ist an Aufnahmen 29, die an den Scharnieren 31, 32 angeordnet sind, befestigt. Zwischen den Aufnahmen 29 und einem Lager 42 der jeweiligen Scharniere 31, 32 ist jeweils eine Scharnierachse 43 angeordnet. Die Achsen 43 zusammen mit den Lagern 42 realisieren gleichzeitig eine Führung entlang der Längsachse der Scharnierachsen 43. Die Aufnahmen 29 sind über die Scharnierachsen 43 beabstandet zu den Lagern 42 gehalten. Die Position des oberen Türblattelements 11 relativ zu dem Schlitten ist über Blockierelemente 7, die in der vorliegenden Darstellung nicht sichtbar sind, fixiert. Die Blockierelemente 7 verhindern sowohl eine Schwenkbewegung des oberen Türblattelementes 11 um die Scharnierachsen 43 als auch ein Absinken der Aufnahmen 29 in Richtung der Lager 42. Das obere Scharnier 31 weist außerdem eine Feder 45 auf, die die gezeigte Anordnung zusätzlich in Richtung der Lager 42 vorspannt.

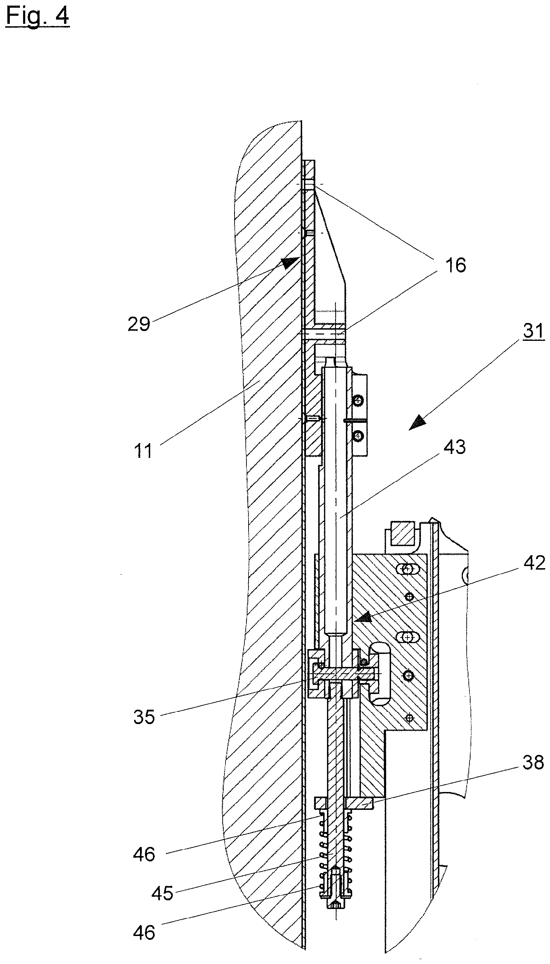

Figur 4 zeigt eine Schnittdarstellung des oberen Scharniers 31 aus Figur 3.

Wie der vorliegenden Darstellung entnommen werden kann, sind in den Aufnahmen 29 Befestigungsbohrungen 16 zur Fixierung des oberen Türblattelements 11 an der Aufnahme 29 vorgesehen. Das obere Türblattelement 11 kann somit beispielsweise durch eine Verschraubung feststehend mit der Aufnahme 29 verbunden werden.

In der gezeigten Schnittdarstellung ist deutlich zu erkennen, dass die Scharnierachse 43 mit dem Lager 42 über eine Abreißschraube 35 feststehend verbunden ist. Die Abreißschraube 35 ist durch eine quer zur Längsachse der Scharnierachse 43 laufende Bohrung in dem Lager 42 befestigt. Die Scharnierachse 43 ist außerdem geeignet ausgebildet, dass sie in Zusammenwirkung mit dem Lager 42 eine vertikale Führung der Scharnierachse 43 in dem Lager 42 ausbildet.

An einem unteren Ende der Scharnierachse 43 ist die Feder 45 zwischen zwei Hülsen 46 gelagert, wobei ein Anschlag 38 vorgesehen ist, der einerseits als Wiederlager für die Feder 45 bzw. die Hülse 46 und andererseits als Anschlag für die Scharnierachse in ausgelöstem Zustand dient. Das obere Scharnier 31 ist über eine Lasche an dem Schlitten 5 befestigt.

Das zweite obere Scharnier 32 ist mit Ausnahme der fehlenden Vorspannung durch die Feder 45 baugleich zu dem ersten oberen Scharnier 31 ausgebildet.

Bei einem Überführen der Schiebetüre 1 vom Normalbetrieb in den Schwenkbetrieb bewirkt eine auf das Türblatt 10 ausgeübte Kraft einen Drehmoment in den Scharnieren 31, 32 wodurch die Abreißschrauben 35 durch die erzeugte Kraftwirkung an ihren Sollbruchstellen brechen bzw. abreißen und somit der Sicherheitsschwenkmechanismus 3 ausgelöst wird. Bei einem Abreißen der Abreißschrauben 35 kann das Türblatt 10 einerseits um die Scharniere 31, 32 schwenken und andererseits aufgrund der wirkenden Schwerkraft und unterstützt durch die vorgesehene Feder 45 eine Abwärtsbewegung um den Abstand zwischen einer Unterkante der Aufnahmen 29 und einer Oberkante der Lager 42 ausführen. Es wird auf diese Weise erreicht, dass das Türblatt 10 der Schiebetüre einerseits schwenkbar ist und andererseits Beschädigungen durch eine Türoberkante weitgehend verhindert werden können.

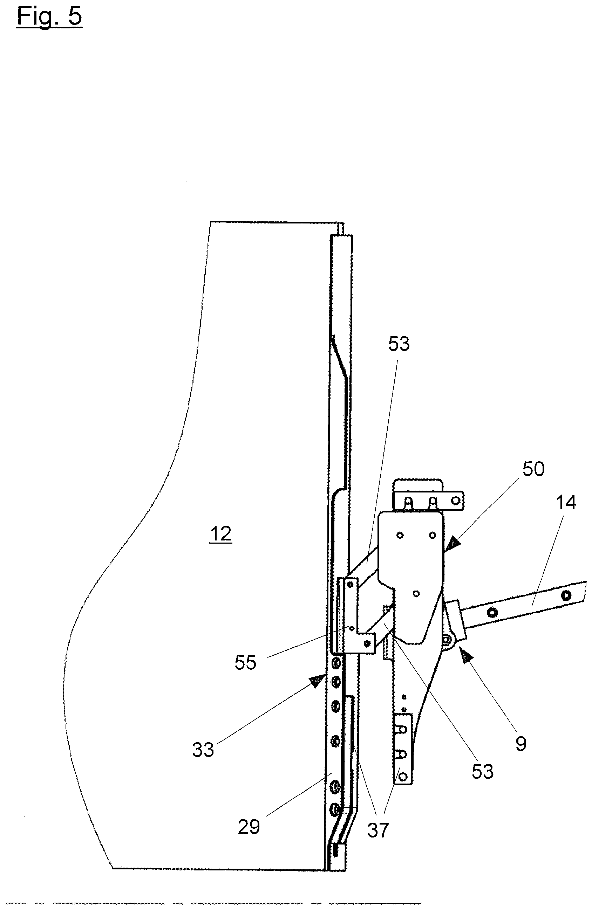

Figur 5 zeigt eine vergrößerte Darstellung des Unterschlittens 9 aus Figur 1.

Aufgrund der nach unten geneigten Ausführung der Unterschiene 14 ist an dem Unterschlitten 9 eine Hebevorrichtung 50 angeordnet, die das untere Türblattelement 12 bei einem Überführen des Türblattes 10 aus dem schiebebetriebenen Schwenkbetrieb vom Boden anhebt und damit ein weiteres Absenken des unteren Türblattelementes 12 verhindert. Die Hebevorrichtung 50 weist dazu zwei Schwenkarme 53 auf, die zwischen dem Unterschlitten 9 und einem unteren Scharnier 33, an dem das untere Türblattelement 12 angeordnet ist, sitzen. Die beiden Schwenkarme 50 sind diagonal versetzt an dem Unterschlitten 9 schwenkbar angeordnet und sind korrespondierend hierzu an einer L-förmigen Aufnahme 55, die an dem unteren Scharnier 33 sitzt, befestigt. Das untere Scharnier 33 weist ähnlich wie die oberen Scharniere 31, 32 eine Aufnahme 29 auf, an der das untere Türblattelement 12 befestigt ist. Um im Normalbetrieb der Schiebetüre 1 ein Schwenken des unteren Türblattelements 12 zu verhindern ist zwischen dem unteren Scharnier 33 und dem Unterschlitten 9 ein als Abreißblech 37 ausgebildetes Blockierelement 7 vorgesehen. Das Abreißblech 37 ist so ausgebildet, dass bei einem Überführen des Türblattes 10 vom Normalbetrieb in den Schwenkbetrieb eine an dem Abreißblech 37 auftretende Kraft zu einem Zerbrechen des Abreißbleches führt, so dass ein Schwenken des unteren Scharniers 33 freigegeben wird.

Um gleichzeitig ein Anheben des unteren Türblattelementes 12 zu bewirken ist die Unterschiene 14 mit einem endseitigen Anschlag versehen, der den Unterschlitten 9 in einer Endposition fixiert. Da das Türblatt 10 und damit auch das untere Türblattelement 12 bei Auftreten einer Kraftwirkung in Schwenkrichtung aufgrund der an der Öffnung der Tasche der Trennwand 2 auftretenden Hebelwirkung weiter aus der Trennwand 2 herausgezogen wird, wird durch die Schwenkarme 53 automatisch ein Anheben des unteren Türblattelementes 12 bewirkt.

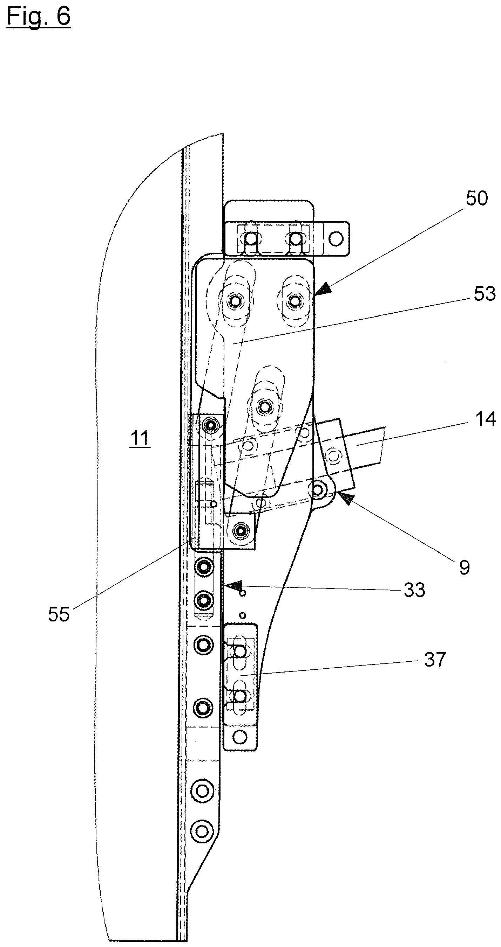

Figur 6 ist eine teiltransparente Darstellung von Figur 5.

In dieser Darstellung ist besonders gut die Aufhängung der Schwenkarme 53 an dem Unterschlitten 9 sowie deren Befestigung an der Aufnahme 55 sowie an dem unteren Scharnier 33 zu erkennen. Ebenso ist in Figur 6 besonders gut die an dem Abreißblech 37 vorgesehene Sollbruchstelle im Kontaktbereich zwischen dem unteren Scharnier 33 und dem Unterschlitten 9 zu sehen.

Es wird darauf hingewiesen, dass im Falle einer vertikal verlaufenden Unterschiene ein Sicherheitsschwenkmechanismus gemäß der vorliegenden Erfindung auch ohne eine Hebeeinrichtung 50 für das untere Türblattelement 11 auskommt. In diesem Fall ist es lediglich notwendig, einen Schwenkbetrieb des Türblattes 10 freizugeben und ein Absenken des oberen Türblattelementes 11 gemäß der zuvor beschriebenen oberen Scharniere 31, 32 mit Abreißschrauben 35 zu ermöglichen.

Der Sicherheitsschwenkmechanismus 3 kann zusätzlich mit einem Anschlag zur Begrenzung des max. Schwenkwinkels der Schiebetüre 1 im Schwenkbetrieb ausgestattet sein. Auf diese Weise können Verletzungen von Personen, die sich im Bereich der Türe aufhalten, vermieden werden.

### Bezugszeichenliste

- 1: Schiebetüre
- 2: Trennwand
- 3: Sicherheitsschwenkmechanismus
- 4: Linearführung
- 5: Schlitten
- 6: Gasdruckfeder
- 7: Blockierelement
- 8: Drehpunkt
- 9: Unterschlitten

- 10: Türblatt
- 11: oberes Türblattelement
- 12: unteres Türblattelement
- 14: Unterschiene
- 16: Befestigungsbohrungen
- 18: Führungswagen
- 19: Führungsschiene

- 29: Aufnahme
- 31: oberes Scharnier
- 32: oberes Scharnier
- 33: unteres Scharnier
- 35: Abreißschraube
- 37: Abreißblech
- 38: Höhenanschlag

- 40: Absenkeinrichtung
- 42: Lager
- 43: Führung, Scharnierbolzen
- 45: Feder
- 46: Hülse

- 50: Hebeeinrichtung
- 53: Schwenkarme
- 55: Aufnahme

## Patentansprüche

1. Schiebetüre (1), mit einem Türblatt (10), mit einem Schlitten (5,9) zur Führung der Schiebetüre und mit einem Sicherheitsschwenkmechanismus (3) mit
- wenigstens einem Scharnier (31, 32, 33), das zwischen dem Türblatt (10) und dem Schlitten (5, 9) zur Führung der Schiebetüre (1) angeordnet ist, **dadurch gekennzeichnet, dass** die Schiebetüre
- eine Absenkanordnung (40) zum Absenken der Schiebetüre (1) in einem ausgelösten Zustand aufweist, und dass zwischen dem Türblatt (10) und dem Schlitten (5, 9) wenigstens ein Blockierelement (7, 35, 37) vorgesehen ist, das das Scharnier (31, 32, 33) und/oder die Absenkanordnung (40) in nicht ausgelöstem Zustand blockiert.

2. Schiebetüre (1) nach Anspruch 1,
**dadurch gekennzeichnet, dass**
das wenigstens eine Blockierelement (7, 35, 37) derart ausgebildet ist, dass eine Überführung der Schiebetüre (1) in den ausgelösten Zustand irreversibel ist.

3. Schiebetüre (1) nach einem der vorhergehenden Ansprüche,
**dadurch gekennzeichnet, dass**
das wenigstens eine Blockierelement (7, 35, 37) als Abreißelement (35, 37) ausgebildet ist.

4. Schiebetüre (1) nach Anspruch 3,
**dadurch gekennzeichnet, dass**
das Abreißelement als Abreißschraube (35) oder Abreißblech (37) ausgebildet ist.

5. Schiebetüre (1) nach einem der vorhergehenden Ansprüche,
**dadurch gekennzeichnet, dass** wenigstens zwei Blockierelemente (7, 35, 37) vorgesehen sind.

6. Schiebetüre (1) nach einem der vorhergehenden Ansprüche,
**dadurch gekennzeichnet, dass** wenigstens zwei Scharniere (31, 32, 35) vorgesehen sind, wobei pro Scharnier (31, 32, 33) ein Blockierelement (7, 35, 37) vorgesehen ist.

7. Schiebetüre (1) nach einem der vorhergehenden Ansprüche,
**dadurch gekennzeichnet, dass**
die Schiebetüre (1) ein wenigstens zweiteilig ausgeführtes Türblatt (10) mit einem oberen Türblattelement (11) und einem unteren Türblattelement (12) aufweist.

8. Schiebetüre (1) nach Anspruch 7,
**dadurch gekennzeichnet, dass**
die Absenkeinrichtung (40) auf das obere Türblattelement (11) wirkt.

9. Schiebetüre (1) nach einem der Ansprüche 7 oder 8,
**dadurch gekennzeichnet, dass**
eine Hebeeinrichtung (50) vorgesehen ist, die auf das untere Türblattelement (12) wirkt.

10. Schiebetüre (1) nach Anspruch 9,
**dadurch gekennzeichnet, dass**
die Hebeeinrichtung (50) zwei Schwenkarme (53) aufweist.

11. Schiebetüre (1) nach einem der vorhergehenden Ansprüche,
**dadurch gekennzeichnet, dass** ein Anschlag zur Begrenzung eines Schwenkwinkels der Schiebetüre (1) vorgesehen ist.

12. Schiebetüre (1) nach einem der vorhergehenden Ansprüche,
**dadurch gekennzeichnet, dass** das wenigstens ein Blockierelement zweiteilig ausgebildet ist, wobei ein erster Teil das Scharnier und ein zweiter Teil die Absenk- oder Hebeeinrichtung blockiert.

## Claims

1. Sliding door (1) with a door leaf (10), with a slide (5, 9) to guide the sliding door and with a safety swivel mechanism (3) with
- at least one hinge (31, 32, 33), arranged between the door leaf (10) and the slide (5, 9) to guide the sliding door (1), **characterised in that** the sliding door
- has a lowering arrangement (40) for lowering the sliding door (1) into a released state, and that there is provided between the door leaf (10) and the slide (5, 9) at least one locking element (7, 35, 37), which locks the hinge (31, 32, 33) and/or the lowering arrangement (40) in the non-released state.

2. Sliding door (1) according to claim 1,
**characterised in that** the at least one locking element (7, 35, 37) is so designed that transfer of the sliding door (1) into the released state is irreversible.

3. Sliding door (1) according to any of the preceding claims,
**characterised in that**
the at least one locking element (7, 35, 37) is in the form of a shear-off element (35, 37).

4. Sliding door (1) according to claim 3,
**characterised in that**
the shear-off element is in the form of a shear-off screw (35) or shear-off plate (37).

5. Sliding door (1) according to any of the preceding claims
**characterised in that**
at least two locking elements (7, 35, 37) are provided.

6. Sliding door (1) according to any of the preceding claims,
**characterised in that**
at least two hinges (31, 32, 33) are provided, with one locking element (7, 35, 37) being provided for each hinge (31, 32, 33).

7. Sliding door (1) according to any of the preceding claims,
**characterised in that**
the sliding door (1) has a door leaf (10) made in at least two parts, with an upper door leaf element (11) and a lower door leaf element (12).

8. Sliding door (1) according to claim 7
**characterised in that**
the lowering arrangement (40) acts on the upper door leaf element (11).

9. Sliding door (1) according to any of claims 7 or 8,
**characterised in that**
a lifting device (50) is provided, which acts on the lower door leaf element (12).

10. Sliding door (1) according to claim 9,
**characterised in that**
the lifting device (50) has two swivel arms (53).

11. Sliding door (1) according to any of the preceding claims,
**characterised in that**
a stop is provided to limit the angle of swivel of the sliding door (1).

12. Sliding door (1) according to any of the preceding claims,
**characterised in that**
the at least one locking element is in two parts, wherein a first part locks the hinge and a second part locks the lowering or lifting device.

## Revendications

1. Porte coulissante (1), avec un ouvrant (10), avec un coulisseau (5, 9) pour le guidage de la porte coulissante et avec un mécanisme de pivotement de sécurité (3) avec
- au moins une charnière (31, 32, 33), qui est agencée entre l'ouvrant (10) et le coulisseau (5, 9) pour le guidage de la porte coulissante (1), **caractérisée en ce que** la porte coulissante
- présente un agencement d'abaissement (40) pour l'abaissement de la porte coulissante (1) dans un état déclenché, et qu'entre l'ouvrant (10) et le coulisseau (5, 9) respectivement un élément de blocage (7, 35, 37) est prévu, qui bloque la charnière (31, 32, 33) et/ou l'agencement d'abaissement (40) dans un état non déclenché.

2. Porte coulissante (1) selon la revendication 1,
**caractérisée en ce que**
l'au moins un élément de blocage (7, 35, 37) est réalisé de telle sorte qu'un passage de la porte coulissante (1) à l'état déclenché est irréversible.

3. Porte coulissante (1) selon l'une quelconque des revendications précédentes,
**caractérisée en ce que**
l'au moins un élément de blocage (7, 35, 37) est réalisé en tant qu'élément d'arrachement (35, 37).

4. Porte coulissante (1) selon la revendication 3,
**caractérisée en ce que**
l'élément d'arrachement est réalisé en tant que vis d'arrachement (35) ou de tôle d'arrachement (37).

5. Porte coulissante (1) selon l'une quelconque des revendications précédentes,
**caractérisée en ce que**
au moins deux éléments de blocage (7, 35, 37) sont prévus.

6. Porte coulissante (1) selon l'une quelconque des revendications précédentes,
**caractérisée en ce que**
au moins deux charnières (31, 32, 35) sont prévues, dans laquelle un élément de blocage (7, 35, 37) est prévu par charnière (31, 32, 33).

7. Porte coulissante (1) selon l'une quelconque des revendications précédentes,
**caractérisée en ce que**
la porte coulissante (1) présente un ouvrant (10) réalisé au moins en deux parties avec un élément d'ouvrant supérieur (11) et un élément d'ouvrant inférieur (12).

8. Porte coulissante (1) selon la revendication 7,
**caractérisée en ce que**
le dispositif d'abaissement (40) agit sur l'élément d'ouvrant supérieur (11).

9. Porte coulissante (1) selon l'une quelconque des revendications 7 ou 8,
**caractérisée en ce que**
un dispositif de levage (50) est prévu, qui agit sur l'élément d'ouvrant inférieur (12).

10. Porte coulissante (1) selon la revendication 9,
**caractérisée en ce que**
le dispositif de levage (50) présente deux bras pivotants (53).

11. Porte coulissante (1) selon l'une quelconque des revendications précédentes,
**caractérisée en ce qu'**une butée est prévue pour la limitation d'un angle de pivotement de la porte coulissante (1).

12. Porte coulissante (1) selon l'une quelconque des revendications précédentes,
**caractérisée en ce que** l'au moins un élément de blocage est réalisé en deux parties, dans laquelle une première partie bloque la charnière et une deuxième partie bloque le dispositif d'abaissement ou de levage.
